# EUROPÄISCHE PATENTSCHRIFT

(11) **EP 4 347 134 B1**
(45) Veröffentlichungstag und Bekanntmachung des Hinweises auf die Patenterteilung: **23.04.2025**
(21) Anmeldenummer: 22729649.8
(22) Anmeldetag: 19.05.2022
(51) Int. Cl.: F16J 15/3204, F16J 15/40, B04B 1/20, B04B 7/00, B04B 9/12

(54) **VOLLMANTEL-SCHNECKENZENTRIFUGE**
SOLID BOWL SCREW CENTRIFUGE
CENTRIFUGEUSE À VIS À BOL PLEIN

(30) Priorität: 25.05.2021 DE 102021113425
(43) Veröffentlichungstag der Anmeldung: 10.04.2024
(73) Patentinhaber: GEA Westfalia Separator Group GmbH, 59302 Oelde (DE)
(72) Erfinder: FRANZKE, Torsten, 59302 Oelde (DE); KNOSPE, Volker, 48167 Münster (DE)
(74) Vertreter: Specht, Peter
(86) Internationale Anmeldenummer: PCT/EP2022/063573
(87) Internationale Veröffentlichungsnummer: WO 2022/248331

(56) Entgegenhaltungen:
- CN-A- 112 228 565
- US-A- 3 729 128
- US-A1- 2017 292 612

## Beschreibung

Die Erfindung betrifft eine Vollmantel-Schneckenzentrifuge nach dem Oberbegriff des Anspruchs 1 sowie jeweils ein Verfahren zum Betrieb einer solchen Vollmantel-Schneckenzentrifuge nach Anspruch 3.

Vollmantel-Schneckenzentrifuge werden zum Trennen bzw. Klären einer Suspension in wenigstens eine Flüssigkeitsphase und eine Feststoffphase verwendet. Bei derartigen Vollmantel-Schneckenzentrifugen werden oftmals Radialwellendichtringe zum Schutz eines oder mehrerer Lager, insbesondere Wälzlager, gegen ein Eindringen der Suspension eingesetzt. Hierbei wird z.B. ein Dichtungskäfig des Radialwellendichtrings in ein Lagergehäuse eingesetzt, während eine Dichtlippe auf einer rotierenden Welle aufliegt. Durch die hohen im Betrieb erreichten Umfangsgeschwindigkeiten der Wellen der Vollmantel-Schneckenzentrifuge unterliegt die Dichtlippe eines Radialwellendichtrings einem erheblichen Verschleiß.

Um eine genügende Dichtfunktion eines Radialwellendichtrings zu gewährleisten, wird die Dichtlippe an die Lauffläche oder Gegendichtfläche der rotierenden Welle angepresst. Die Anpresskraft kann über die elastische Dichtlippe erzeugt werden, welche im nicht montierten Zustand einen kleineren Durchmesser aufweist als der Durchmesser der Welle, die die Gegendichtfläche bildet. Bei der Montage eines solchen Radialwellendichtrings wird die elastische Dichtlippe bis auf den Wellendurchmesser aufgedehnt, wobei die Rückstellkraft der elastischen Dichtlippe die gewünschte Anpresskraft bzw. gewünschte Flächenpressung der Dichtlippe erzeugt. Die Anpresskraft kann zusätzlich auch durch eine Ring- oder Schlangenfeder erhöht werden.

Je höher die Anpresskraft der Dichtlippe gewählt wird, desto höher ist auch die Reibleistung der Dichtlippe und somit der Wärmeeintrag in die Lagerung der Welle. Die hierdurch verursachte Erhöhung der Lagertemperatur ist unerwünscht. Die wesentlichen Einflussfaktoren für die Reibungsverluste sind die konstruktive Ausführung des verwendeten Radialwellendichtrings, der Werkstoff der Dichtlippe sowie die Anpresskraft, mit der die Dichtlippe auf die Welle gedrückt wird, die Drehzahl, mit der die Welle umlauft, die Präzision, mit der die Welle hergestellt wurde, sowie die Oberflächengüte der Welle oder der Gegendichtfläche und die Art der Schmierung der abzudichtenden Lagerstellen.

Die Reibungsverluste eines Radialwellendichtrings mit 110 mm Durchmesser und einer Wellendrehzahl von 6500 1/min können nach Literaturangaben etwa 700 W betragen und sind damit nicht unerheblich.

Zusätzlich wird der Verschleiß eines Radialwellendichtrings in einer Vollmantel-Schneckenzentrifuge erhöht, wenn eine zu klärende Suspension an die Radialwellendichtringe gelangt, insbesondere dann, wenn es sich um eine abrasiv wirkende Suspension, wie z.B. Klärschlamm handelt.

Erst wenn die Lagerung auf Grund von Undichtigkeit beschädigt wird, führt dies zu detektierbaren Schwingungen, Geräuschen oder einer deutlichen Temperaturerhöhung. Diese indirekten Folgeerscheinungen der Dichtungsleckage können überwacht werden. Der aktuelle Verschleißgrad und damit der vermutliche Zeitpunkt des Versagens eines Radialwellendichtrings in einer Vollmantel-Schneckenzentrifuge kann im Sinne einer vorausschauenden Wartung nicht automatisiert erkannt bzw. abgeschätzt oder vorhergesagt werden.

Aus der DE 34 30 508 A1 ist eine Filterzentrifuge zum Trennen von in einer Suspension befindlichen Feststoff- und Flüssigkeitsbestandteilen mit einer umlaufenden, Filtratdurchlässe aufweisenden Trommel bekannt. Die Trommel der Zentrifuge ist mit einer die Trommel tragenden Welle in Wälzlagern auf einem Maschinengestell gelagert. Die Wälzlager sind mit wenigstens einer zwischen Welle und Maschinengestell angeordneten Dichtung zum Schutz gegen Eindringen von Suspensionsbestandteilen abgedichtet. Die Schutzwirkung der Dichtung ist dadurch besonders hoch, weil die Dichtung zwei Radialwellendichtringe umfasst, die in gegenseitigem axialem Abstand unter Ausbildung eines Zwischenraumes an der Welle angeordnet sind und der Zwischenraum durch einen Entlüftungskanal zur Atmosphäre hin entlüftet ist. Nachteilig an dieser Lösung ist u.a. die fehlende Abschätzbarkeit oder Vorhersagbarkeit eines Totalausfalls eines Radialwellendichtrings.

Zum Stand der Technik sei insofern beispielhaft die US 2016 0310 969 A1 genannt, bei welcher ein Lager eines Dekanters gekühlt wird, welches zwischen zwei Radialwellendichtringen angeordnet ist. Eine Kammer zwischen diesen Dichtungen wird mit Fluid gekühlt das in die Kammer geleitet und wieder aus dieser abgeleitet wird.

Die DE 2 212 165 A offenbart eine Dichtungsanordnung für eine Welle, in welcher zwei Radialwellendichtringe gegengleich angeordnet sind. Diese Dichtungen begrenzen somit eine Kammer. Es wird z.B. Luft durch eine Bohrung und eine Drossel in die Kammer geleitet. Es wird der Gasdruck in der Kammer so eingestellt, dass Gas unter den Dichtlippen der Radialwellendichtringen entweicht.

Zum Stand der Technik sei ferner die gattungsgemäße CN 112 228 565 A genannt.

Vor diesem Hintergrund hat die Erfindung die Aufgabe, den Verschleiß der Radialwellendichtringe auf einfache Weise gering zu halten. Zudem soll nach einer Weiterbildung die Vorhersagbarkeit eines Totalausfalls eines Radialwellendichtrings verbessert werden.

Die Erfindung löst diese Aufgabe durch den Gegenstand des Anspruchs 1.

Diese vorteilhafte Ausgestaltung und das Verfahren nach Anspruch 3 eröffnen verschiedenste Optionen.

Es wird auf konstruktiv einfache Art und Weise und damit vorteilhaft eine Druckmessung in der jeweiligen Kammer möglich. Über das Druckmessgerät kann der Gasdruck Pₐₖₜ in der Kammer und/oder in einem Raum angrenzend zur Kammer bestimmt werden. Das Druckmessgerät kann mit der Steuer- und / oder Regeleinrichtung wirkverbunden sein.

Derart wird es möglich, den Verschleiß der Radialwellendichtringe auf einfache Weise zu verringern, da es möglich ist, diese im Betrieb leicht von der Welle, an der ihre freien Enden sonst anliegen, soweit zu lösen, dass die Reibung und der damit einhergehende Verschleiß in diesem Bereich verringert werden.

Da sich an die Leitung eine Gasquelle anschließt, wird eine konstruktiv einfache Möglichkeit geschaffen, um die - ggf. jeweilige - Kammer mit Gasdruck zu beaufschlagen. Sodann kann diese Konstruktion genutzt werden, um in vorteilhafter Weise eine Bestimmbarkeit eines aktuellen Verschleißgrades der Dichtungen zu erreichen, sowie eine Abschätzbarkeit oder Vorhersagbarkeit eines Totalausfalls einer Dichtung, so dass eine vorausschauende Wartung der Dichtungen möglich wird.

Und da beidseits des jeweiligen zu schützenden Lagers jeweils eine der Dichtanordnungen angeordnet ist und dass die jeweiligen Dichtlippen der Radialwellendichtringe der jeweiligen Kammer jeweils in entgegengesetzter Richtung von der jeweiligen Kammer weggerichtet sind. Derart ist das Lager axial zu beiden Seiten hin jeweils durch eine der vorteilhaften Dichtanordnungen geschützt.

Es ist vorteilhaft sowie einfach, wenn die jeweilige Kammer jeweils über eine Bohrung und/oder eine Leitung mit dem Gasdruck beaufschlagt werden kann.

Dabei kann weiter vorteilhaft und konstruktiv einfach vorgesehen sein, dass zwischen der Gasquelle und den Dichtanordnungen der jeweiligen Kammer jeweils eine Blende angeordnet oder ausgebildet ist.

Die Aufgabe wird auch durch das Verfahren nach Anspruch 3 gelöst.

Nach Anspruch 3 wird ein Verfahren zum Betrieb einer Vollmantel-Schneckenzentrifuge geschaffen, bei welchem Verfahren eine zulaufende Suspension Su in wenigstens eine Flüssigkeitsphase FI und wenigstens eine Feststoffphase Fe getrennt wird, wobei während der Trennung in der jeweiligen Kammer der wenigstens einen Dichtanordnung mit jeweils zwei Radialwellendichtringen durch die Gasquelle ein Gasdruck Pₐₖₜ durch eine mit der jeweiligen Kammer wirkverbundene Gasquelle erzeugt wird, wobei der Gasdruck Pₐₖₜ zumindest bis zu einem Gasdruck Pₘₐₓ erhöht wird, bei dem die radiale Anlage der jeweiligen Dichtlippe überwunden wird, so dass eine Gasleckage an den Dichtlippen des jeweiligen Radialwellendichtringes bei einem Leckagedruck Pₘₐₓ beginnt. Der aktuelle Leckagedruck Pₐₖₜ, welcher dem aktuellen Gasdruck Pₐₖₜ in der Kammer entspricht, wird gemessen und der aktuell gemessene Leckagedruck Pₐₖₜ wird mit wenigstens einem gespeicherten Referenzwert verglichen. Sodann wird der aktuelle Verschleißzustand der jeweiligen Dichtlippe bzw. der Dichtanordnung anhand des Vergleiches des aktuell gemessenen Leckagedrucks Pₐₖₜ mit dem wenigstens einen gespeicherten Referenzwert ermittelt und/oder bewertet wird.

Nach Anspruch 4 wird zudem in Weiterbildung des Anspruchs 3 ein Verfahren zum Betrieb einer Vollmantel-Schneckenzentrifuge geschaffen, bei welchem Verfahren eine zulaufende Suspension Su in wenigstens eine Flüssigkeitsphase FI und wenigstens eine Feststoffphase Fe getrennt wird, wobei während der Trennung in der jeweiligen Kammer der wenigstens einen Dichtanordnung mit jeweils zwei Radialwellendichtringen ein Gasdruck Pₐₖₜ durch eine mit der jeweiligen Kammer wirkverbundene Gasquelle erzeugt wird, wobei die jeweilige Kammer durch eine jeweilige Blende mit dem Gasdruck beaufschlagt wird und bzw. so dass das Zuführungsvolumen durch die jeweilige Blende begrenzt wird und wobei der Zuführdruck P_{zu} vor der jeweiligen Blende zumindest zeitweise so eingestellt wird, dass durch den Gasdruck Pₐₖₜ in der Kammer die radiale Anlage der jeweiligen Dichtlippe überwunden wird, so dass eine Gasleckage an den Dichtlippen des jeweiligen Radialwellendichtringes bei einem Leckagedruck Pₘₐₓ beginnt. Der aktuelle Leckagedruck Pₐₖₜ, welcher dem aktuellen Gasdruck Pₐₖₜ in der Kammer entspricht, wird gemessen und der aktuell gemessene Leckagedruck Pₐₖₜ wird mit wenigstens einem gespeicherten Referenzwert verglichen. Sodann wird der aktuelle Verschleißzustand der jeweiligen Dichtlippe bzw. der Dichtanordnung anhand des Vergleiches des aktuell gemessenen Leckagedrucks Pₐₖₜ mit dem wenigstens einen gespeicherten Referenzwert ermittelt und/oder bewertet wird.

Derart wird jeweils vorteilhaft der Verschleiß der jeweiligen Dichtringe, verringerbar bzw. im Betrieb verringert.

Dabei kann jeweils der Gasdruck vorteilhaft nach den Anforderungen der jeweilig verbauten Radialwellendichtringe und der Baugröße der jeweiligen Zentrifuge individuell eingestellt werden.

Der Gasdruck P_{zu} wird dabei - beispielsweise durch die Steuer- und / oder Regeleinrichtung und die Gasquelle - bei einem neuen Satz Dichtungen bis zu einem Gasdruck Pₘₐₓ erhöht, bei dem eine Gasleckage einer Dichtlippe des jeweiligen Radialwellendichtrings beginnt. Dadurch wird auf eine einfache Art und Weise ein Referenzwert für den Maximaldruck und dann auch für den Leckagedruck Pₘₐₓ erzeugt.

Dabei wird der Betrag des Leckagedrucks Pₘₐₓ als Referenzwert - insbesondere in der Steuer- und / oder Regeleinrichtung - gespeichert. Dadurch kann der Referenzwert in vorteilhafter Weise jederzeit zu Vergleichszwecken abgerufen werden.

Es wird jeweils der aktuelle Leckagedruck Pₘₐₓ gemessen. Dadurch kann einfach und damit vorteilhaft der aktuelle Zustand der Dichtung abgebildet werden.

Da der aktuell gemessene Leckagedruck Pₘₐₓ mit wenigstens einem gespeicherten Referenzwert für den Leckagedruck Pₘₐₓ verglichen wird, kann in einfacher und damit vorteilhafter Weise ein Rückschluss auf den aktuellen Verschleißzustand der Dichtung erfolgen.

Es wird insbesondere der aktuelle Verschleißzustand der jeweiligen Dichtlippe ermittelt und/oder bewertet. Dies erfolgt durch Vergleich des aktuellen Leckagedrucks mit einem oder mehreren hinterlegten Referenzwerten, so dass eine Restlebensdauer der Dichtung angegeben werden kann. Dadurch wird in vorteilhafter Weise eine vorausschauende Wartung der Dichtung möglich.

Nach Anspruch 3 wird die Blende in der jeweiligen Gasleitung zunächst so dimensioniert, dass eine definiert kleine Gasmenge durch die jeweiligen Dichtlippen entweichen kann. Denn es kann die zugeführte Gasmenge/Zeit in die jeweilige Kammer bei einem konstanten Zuführdruck P_{zu} > Pₘₐₓ jeweils durch die Blende begrenzt sein. Es ergibt sich ein Leckagegasstrom, wenn der Zuführdruck größer als der Leckagedruck Pₘₐₓ ist, wobei in Abhängigkeit von der Blendenöffnung ein relativ konstanter Gasfluss entstehen kann. Hinter der Blende bzw. in der Kammer stellt sich somit der Leckagegasstrom ein, der wiederum vom Verschleißzustand an den Dichtlippen abhängen kann. Der Messwert dieses Gasdruckes kann in einer Steuerung mit gespeicherten Referenzwerten für den Leckagedruck verglichen werden. Derart ergibt sich ein Rückschluss auf den Verschleißzustand der Dichtung bzw. der Dichtanordnung. Eine Gasdruckregeleinrichtung und eine Durchflussmessung sind hierbei nicht erforderlich, so dass dieses Verfahren besonders einfach ausgestaltet werden kann.

Weitere vorteilhafte Ausgestaltungen der Erfindung sind den Unteransprüchen zu entnehmen.

Nachfolgend wird die Erfindung unter Bezug auf die Zeichnung anhand von Ausführungsbeispielen näher beschrieben. Die Erfindung ist nicht auf diese Ausführungsbeispiele beschränkt, sondern kann im Rahmen der Ansprüche auch anders umgesetzt werden. Zudem können einzelnen Merkmale der nachfolgende Ausführungsbeispiele auch jeweils für sich mit jeweils anderen Ausführungsbeispielen kombiniert werden. Es zeigen:
- Figur 1:: eine schematische, schnittartige Ansicht einer Vollmantel-Schneckenzentrifuge;
- Figur 2:: ein Ausschnitt einer Trommelwellenlagerung einer Vollmantel-Schneckenzentrifuge insbesondere nach Art der Fig. 1;
- Figur 3:: ein Diagramm, in dem der Reibungsverlust über der Umfangsgeschwindigkeit eines Radialwellendichtrings der Vollmantel-Schneckenzentrifuge aus Fig. 1 aufgetragen ist;
- Figur 4: einen Messschrieb eines ersten Versuchs mit einem Radialwellendichtring-Paar an einem ersten Lager "FLT" und einem zweiten Lager "FS".
- Figur 5: einen Messschrieb eines zweiten Versuchs mit einem Radialwellendichtring-Paar an einem ersten Lager "FLT" und einem zweiten Lager "FS".

Die im Folgenden verwendeten Begriffe "rechts", "links", "horizontal", "vertikal" beziehen sich auf die jeweilige Zeichnungsebene.

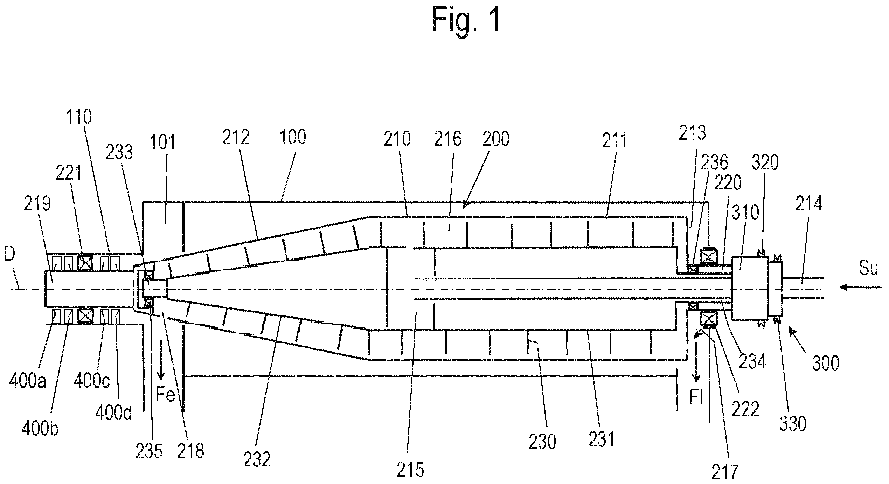

Fig. 1 zeigt eine Vollmantel-Schneckenzentrifuge mit einem im Betrieb nicht drehbaren bzw. sich nicht drehenden Gestell und vorzugsweise einem Gehäuse 100 sowie einem im Betrieb drehbaren bzw. sich drehenden Rotor 200.

Der Rotor 200 weist eine drehbare Trommel 210 mit einer hier horizontalen Drehachse D auf. Die Drehachse D kann aber auch anders, insbesondere vertikal, im Raum orientiert sein. Zum Rotor 200 gehört zudem eine in der Trommel 210 angeordnete Schnecke 230, deren Drehachse mit der der Trommel 210 übereinstimmt. Die Schnecke 230 kann im Betrieb mit einer Differenzdrehzahl zur Trommel 210 gedreht werden.

Die Trommel 210 weist einen hier innen und außen zylindrischen Abschnitt 211 auf und einen sich daran axial anschließenden hier innen und außen konischen Abschnitt 212. Der zylindrische Abschnitt 211 wird von einem sich im Wesentlichen radial erstreckenden Trommeldeckel 213 abgeschlossen.

Die Schnecke 230 weist hier ebenfalls einen jedenfalls außen zylindrischen Abschnitt 231 auf und einen sich daran axial anschließenden zumindest außen konischen Abschnitt 232. Sie ist innerhalb der Trommel 210 angeordnet. Die Trommel 201 ist im Betrieb drehbar. Zudem ist die Schnecke 230 im Betrieb drehbar. Vorzugsweise werden die beiden Elemente Trommel 210 und Schnecke 230 im Betrieb mit einer Differenzdrehzahl zueinander gedreht. Zum Drehen dient einer oder mehrere entsprechende Antriebe, z.B. Elektromotore.

In die Trommel 210 ragt ein hier konzentrisch zur Drehachse verlaufendes Zulaufrohr 214, dass in einen Verteiler 215 mündet, durch den eine zu verarbeitende Suspension Su radial in einen Schleuderraum 216 der Trommel 210 geleitet werden kann.

Das Zulaufrohr 214 kann entweder von der Seite des zylindrischen Trommelabschnittes 211 in die Trommel 210 geführt sein oder es kann von der Seite des konischen Trommelabschnitts 212 in die Trommel 210 geführt sein.

In oder an dem Trommeldeckel 213 können einer oder mehrere Flüssigkeitsabläufe 217 ausgebildet sein. Diese können auf verschiedene Weise ausgebildet sein, so als Öffnungen im Trommeldeckel 213, die eine Art Überlaufwehr aufweisen oder auf andre Weise, so als Schälscheibe. Im Bereich des, insbesondere am Ende mdes konischen Abschnitts 212 ist wenigstens ein Feststoffaustrag 218 ausgebildet.

In der Regel ist die Trommel 210 als eine Vollmanteltrommel ausgebildet. In der sich drehenden Trommel 210 wird dann wenigstens die Suspension geklärt bzw. in wenigstens eine Flüssigkeitsphase FI und eine Feststoffphase Fe getrennt. Die wenigstens eine Flüssigkeitsphase FI tritt am Trommeldeckel 213 aus dem Flüssigkeitsablauf 217 aus. Die Feststoffphase bzw. die Feststoffe Fe werden von der Schnecke 230 hingegen in Richtung des Feststoffaustrages 218 transportiert und dort aus der Trommel 210 ausgeworfen.

An dem Trommeldeckel 213 bzw. an der eigentlichen Trommel 210 schließt sich axial ein erster Trommelwellenabschnitt 220 an, der drehfest mit der Trommel 210 verbunden ist. An dem konischen Trommelabschnitt 212 schließt sich axial ein zweiter Trommelwellenabschnitt 219 anschließt, der ebenfalls drehfest mit der Trommel 210 verbunden ist.

An den zylindrischen Abschnitt 231 der Schnecke 230 schließt sich axial ein erster Schneckenwellenabschnitt 234 an, der drehfest mit der Schnecke 230 verbunden ist und an den konischen Trommelabschnitt 232 schließt sich axial ein zweiter Schneckenwellenabschnitt 233 an, der ebenfalls drehfest mit der Schnecke 230 verbunden ist.

Hier ist die Drehachse D horizontal ausgerichtet. Die Drehachse kann auch vertikal oder schräg ausgerichtet sein (hier nicht dargestellt). Die Trommel und/oder die Schnecke können auch einseitig gelagert sein.

Zum Antrieb des Rotors 200 dient eine Antriebsvorrichtung 300 mit einem oder zwei Motoren (hier nicht dargestellt). Der Antriebsvorrichtung 300 kann wenigstens ein Getriebe 310 nachgeschaltet sein. An diesem sind hier beispielhaft schematisch zwei Riemenscheiben 320, 330 dargestellt sind, was andeutet, dass das Getriebe 310 wenigstens zwei Schnittstellen zum Einspeisen eines jeweiligen Drehmomentes des Elektromotors oder der Elektromotoren in das Getriebe 310 aufweisen kann, um die Trommel und die Schnecke anzutreiben.

Alternativ (hier nicht dargestellt) kann der Antrieb des Rotors auch anders, so z.B. über Hydraulikmotoren erfolgen, so dass u.U. kein Getriebe erforderlich ist. Auch kann der Antrieb durch eine Kombination aus Elektromotor/en und Hydraulikmotor/en erfolgen, wobei hierfür andere Getriebe eingesetzt werden und die Riemenscheiben ganz oder teilweise entfallen.

Der Antrieb dreht hier somit einerseits die Trommel 210 und andererseits die Schnecke 230. Dazu weist das Getriebe 310 hier zwei Ausgangswellen auf. Die erste Ausgangswelle ist drehfest mit dem ersten Trommelwellenabschnitt 220 gekoppelt oder direkt mit der Trommel 210 gekoppelt und die zweite Ausgangswelle ist direkt oder indirekt drehfest mit dem ersten Schneckenwellenabschnitt 234 gekoppelt oder direkt mit der Schnecke 230.

Die Trommel 210 und die Welle sind jeweils mit zwei axial in Richtung der Drehachse angeordneten Trommellagern 221, 222 drehbar gelagert. Der Begriff des "Lagers" ist insofern nicht zu eng zu fassen. Jedes der Lager 221, 222 kann jeweils aus einem oder mehreren Einzellagern bestehen, die dann aber axial direkt nebeneinander angeordnet sind, dass sie funktional jeweils als ein Einzellager betrachtet werden können. Die Lager 221, 222 können zudem als Lager verschiedenster Bauart ausgebildet sein, so als Wälzlager - insbesondere als Keramiklager, als Hybrid-Keramiklager, als Magnetlager oder als Gleitlager.

Die Trommellager 221, 222 sind zwischen der Trommel 210 und dem Gestell 100 oder einem mit dem Gestell verbundenen Teil angeordnet, damit die Trommel 210 relativ zum Gestell 100 gedreht werden kann. Dabei sind die Trommellager 221, 222 vorzugsweise radial zwischen der Trommel 210 und dem Gestell 100 oder einem mit dem Gestell verbundenen Teil angeordnet.

Die Schneckenlager 235, 236 sind hingegen radial zwischen der Schnecke 230 und der Trommel 210 angeordnet, so dass die Schnecke 230 relativ zur Trommel 210 drehbar ist. Dabei sind die Schneckenlager 235, 236 vorzugsweise radial zwischen der Trommel 210 und der Schnecke 230 angeordnet.

Bei einer möglichen Ausführungsvariante (nicht dargestellt) kann das eine der Schneckenlager 235 im Bereich des Feststoffaustrages 218 entfallen. In diesem Fall zentriert sich die rotierende Schnecke selbstständig, was z.B. bei einer vertikalen Anordnung des Dekanters bekannt ist.

Axial links und rechts neben einem der Lager, insbesondere der Trommellager - hier beispielhaft neben dem Trommellager 221 am konischen Trommelabschnitt 212 - ist wenigstens eine Dichtanordnung - hier zwei Dichtanordnungen- angeordnet. Diese soll das jeweilige Lager, dem sie zugeordnet ist, während der Verarbeitung der Suspension insbesondere gegen ein Eindringen von Suspension bzw. Supensionsbestandteilen abdichten. Das zu schützende Lager kann jeweils axial von einer der Dichtanordnungen geschützt sein bzw. zwischen zwei Dichtanordnungen angeordnet sein. Es kann aber alternativ auch axial nur zu einer Seite hin von einer einzigen Dichtanordnung geschützt werden (hier nicht dargestellt).

Die jeweilige Dichtanordnung weist jeweils zwei Radialwellendichtringe 400a, b, bzw. 400c, d auf, die jeweils in gegenseitigem axialem Abstand unter Ausbildung einer Kammer 402a, b zwischen den zwei Radialwellendichtringe 400a, b, angeordnet sind. Radial nach innen begrenzt die jeweilige Kammer 402a , die Welle 219 bzw. ein Teil dieser Welle. Radial nach außen hin kann sie ergänzend von dem Ring- oder Hülsenabschnitt 110 begrenzt sein.

Die eine der beiden Dichtanordnungen dichtet hier das Trommellager 221 axial gegen einen Auffangraum 101 für die Feststoffphase Fe ab und die andere Dichtanordnung dichtet es axial zur anderen Seite hin - beispielsweise gegen die Umgebung - ab. Insofern wirkt die jeweilige Dichtanordnung 400 zum Schutz des Trommellagers 221,222 gegen das Eindringen von Bestandteilen der Suspension Su von der entsprechenden axialen Seite.

Ein Radialwellendichtring 400 im Sinne dieser Schrift ist eine Dichtung, die verwendet wird, um rotierende Elemente, wie z.B. rotierende Wellen abzudichten, insbesondere solche die in einem Ring- oder Hülsenabschnitt 110 des Gehäuses 100 drehbar gelagert sind.

Die jeweiligen Radialwellendichtringe 400 weisen dazu eine Dichtlippe 401 auf, die auf der Oberfläche der sich drehenden Welle aufliegt. Die Dichtlippe 401 ist so ausgelegt, dass sie radial auf die Wellenoberfläche oder eine Wellenhülse 405 gedrückt, so dass eine Dichtkraft erzeugt wird, die auf die Welle oder die Wellenhülse 405 wirkt und so eine Dichtwirkung erzeugt wird. Dazu kann auch eine Schlauchfeder oder Wurmfeder vorgesehen sein. Die Radialwellenringe können einen Verstärkungsring z.B. aus Metall aufweisen. Nach außen hin sind sie in dem Ring- oder Hülsenabschnitt 110 festgelegt.

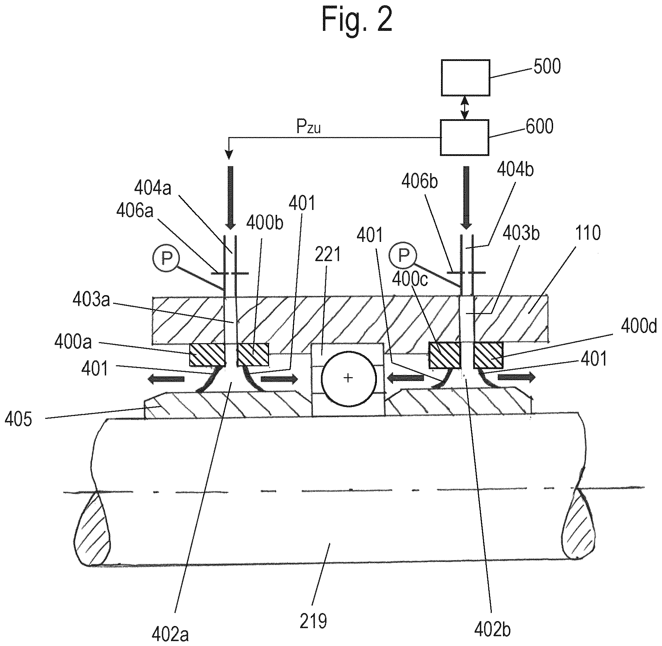

Die oben erwähnte Lagerstelle ist in Fig. 2 vergrößert dargestellt. Axial links und rechts neben dem Trommellager 221 sind jeweils paarweise die vier Radialwellendichtringe 400a, b, c, d angeordnet und bilden somit hier zwei der Dichtanordnungen.

Die Radialwellenringe 400a, b, c, d können insbesondere (radial nach außen hin) an einem umgebenden Ring- oder Hülsenabschnitt 110 festgelegt sein, der ein Element z.B. des Gestells oder Gehäuses sein kann.

Die Dichtlippen 401 von jeweils einem Paar Radialwellendichtringen 400a, b bzw. 400c, d berühren hier jeweils eine jeweilige Wellenhülse 405, der auf den Trommelwellenabschnitt 219 aufgezogen ist. Die Wellenhülse 405 bildet jeweils die Lauffläche oder Gegendichtfläche der paarweise angeordneten Radialwellendichtringe 400a, b, c, d. Die paarweise Radialwellendichtringe 400a, b bzw. 400c, d sind so ausgerichtet, dass die Dichtlippen 401 bei dem jeweiligen Paar nach außen zeigen, d.h. von der jeweiligen Kammer 402a, b wegzeigen.

Die jeweilige Kammer 402a, b ist seitlich durch die Dichtlippen 401 der beiden Radialwellendichtringe 400a, b bzw. 400c, d, und radial nach innen durch den Trommelwellenabschnitt 219 und/oder die jeweilige Wellenhülse 405 begrenzt. Radial nach außen kann sie ferner durch den Ringabschnitt 110 begrenzt sein. In die Kammer mündet eine Zuleitung für ein Gas. Dieses kann aus einer Gasquelle 600 zugeführt werden. Die Gasquelle kann ein Druckluftbehälter sein und/oder ein Kompressor.

Es ist vorteilhaft vorgesehen, dass die jeweiligen Dichtlippen 401 der Radialwellendichtringe 400a, b bzw. 400c, d, der jeweiligen Kammer 402a, b jeweils in entgegengesetzter Richtung von der jeweiligen Kammer 402a,b weggerichtet sind, so dass die beiden Dichtlippen 401 jeweils von einem Gasdruck in der Kammer radial nach außen angehoben werden können. Die Dichtlippen 401 beschreiben eine Art Bogen, der aus der radialen Richtung in eine axiale Richtung übergeht, wobei sie mit dem axialen Abschnitt innen an dem rotierenden Element anliegen können. Die axialen Enden bzw. Abschnitte der beiden Dichtlippen 401 an einer der Kammern 402a,b sind somit voneinander weg nach außen gerichtet. Wären sie nach innen aufeinander zu gerichtet, könnten sie von einem Gasdruck in der Kammer 402a,b nicht angehoben werden, sondern würden mit zunehmendem Gasdruck sogar fester gegen das rotierende Element gedrückt.

Der Gasquelle 600 kann z.B. ein von der Steuer- und /oder Regeleinrichtung 500 ansteuerbares Ventil nachgeschaltet sein. Es kann auch der Kompressor 600 von der Steuer- und /oder Regeleinrichtung 500 ansteuerbar sein (schematisch in Fig. 2 angedeutet aber nicht im Detail dargestellt).

In die jeweilige Kammer 402a, b mündet hier eine Bohrung 403a, b im Ring- oder Hülsenabschnitt 110, an die sich eine Leitung 404a, b anschließen kann, die bis zu der Gasquelle 600 führt. Über die Leitung 404a, b und hier die Bohrung 403a, b kann die jeweilige Kammer 402a, b aus der Gasquelle 600, beispielsweise einer Druckluftquelle, mit einem Gasdruck P_{zu} beaufschlagt werden kann, aus dem ein aktueller Gasdruck Pₐₖₜ in der Kammer 402a, b resultiert.

Es kann ein Druckmessgerät oder einen Drucksensor aufweisen, mit dem der Gasdruck Pₐₖₜ in der jeweiligen Kammer 402a, b messbar oder sensierbar ist. Dies kann z.B. in der jeweilige Leitung 404a, b vorgesehen sein. Das Gas zum Erzeugen des Gasdrucks wird mit Hilfe der Gasquelle 600 bereitgestellt. Diese kann ansteuerbar ausgebildet sein.

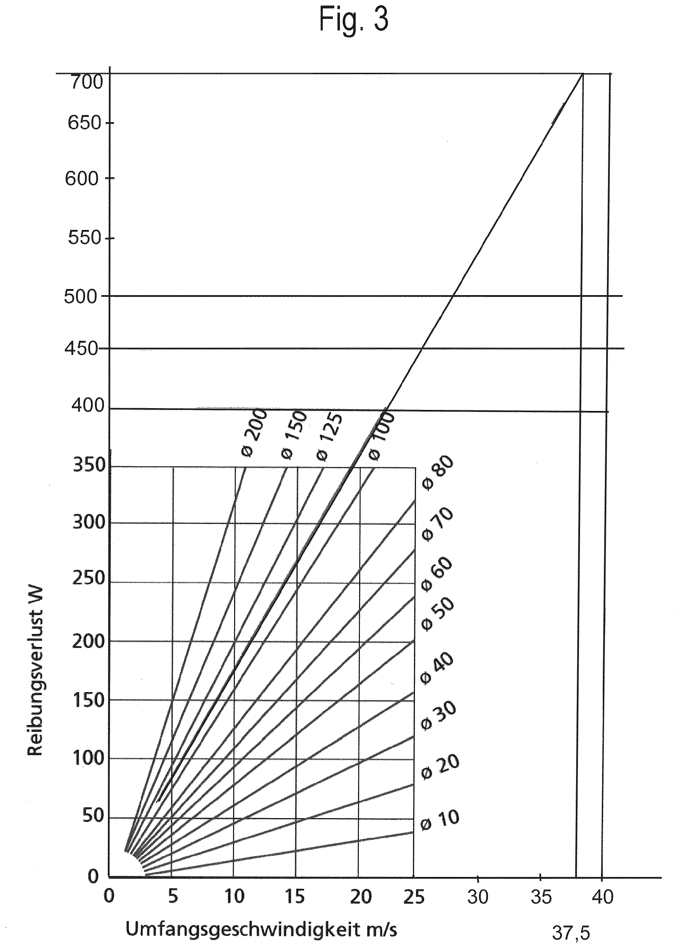

Wie in Fig. 3 zu erkennen, bildet der Anpressdruck der Dichtlippe 401 einen Parameter für den Betrag der Reibungsverluste. Wird nun die jeweilige Kammer 402a, b mit einem Gasdruck Pₐₖₜ beaufschlagt, wird die Dichtlippe 401 auf Grund ihrer Form und Anordnung (Dichtlippe zeigt nach außen) durch den Gasdruck Pₐₖₜ angehoben. Somit wirkt der Gasdruck Pₐₖₜ dem Anpressdruck der jeweiligen Dichtlippe 401 entgegen und reduziert somit den Anpressdruck der Dichtlippe 401 auf die Wellenhülse 405 oder dem Trommelwellenabschnitt 219 und dadurch die Reibungsverluste.

Bei einem Paar Radialwellendichtringen 400a, b bzw. 400c, d mit jeweils intakter Dichtlippe 401 kommt es ab einem bestimmten Gasdruck Pₐₖₜ = Pₘₐₓ in der jeweiligen Kammer 402a, b zu einem Abheben der Dichtlippe 401 von der Wellenhülse 402 oder dem Trommelwellenabschnitt 219. Daraus resultiert dann eine entsprechende Gasleckage.

Mit Hilfe einer entsprechenden Steuer- und / oder Regeleinrichtung, mit der beispielsweise ein Ventil hinter der Gasdruckquelle oder ein Kompressor (hier nicht dargestellt) angesteuert wird, kann der Gasdruck Pₐₖₜ verändert werden. Der Gasdruck Pₐₖₜ kann somit in der jeweiligen Kammer 402a, b bei einer neuen Dichtlippe 401 bis zu einem Gasdruck Pₘₐₓ erhöht werden, bei dem eine Leckage beginnt.

Bei fortschreitendem Verschleiß der Dichtlippe 401 wird der Messwert für den Gasdruck Pₘₐₓ, bei dem die Leckage einsetzt, immer kleiner und kann in der Steuer- und/oder Regeleinrichtung 500 (der insbesondere ein Rechner mit Schnittstellen und einem Speicher ist) mit Referenzwerten für den Gasdruck Pₘₐₓ, bei dem die Leckage einsetzen sollte, verglichen werden. Hieraus ergibt sich ein Rückschluss auf den Verschleißzustand der jeweiligen Dichtlippe 401. Bei diesem Vorgehen sind zusätzlich zur Druckmessung auch eine Druckregelung und eine Durchflussmessung erforderlich.

Alternativ kann die zugeführte Gasmenge/Zeit in die jeweilige Kammer 402a, b bei einem konstanten Zuführdruck P_{zu} > Pₘₐₓ jeweils durch eine Blende 406a, b begrenzt sein. Hierbei ergibt sich ein Leckagegasstrom, da der Zuführdruck P_{zu} größer als der Leckagedruck Pₘₐₓ ist, so dass in Abhängigkeit von der Blendenöffnung ein relativ konstanter Gasfluss entsteht, der die jeweilige Dichtlippe 401 überwindet.

Hinter der Blende bzw. in der jeweiligen Kammer 402a, b stellt sich dabei ein aktueller Gasdruck bzw. ein Leckagedruck Pₐₖₜ ein, welcher vom Verschleißzustand der jeweiligen Dichtlippe 401 abhängt. Der Messwert dieses Gasdruckes in der jeweiligen Kammer 402a, b kann in einer Steuerung mit Referenzwerten verglichen werden und gibt einen Rückschluss auf den Verschleißzustand der jeweiligen Dichtlippe 401. Eine Druckregeleinrichtung und eine Durchflussmessung ist hierbei nicht erforderlich.

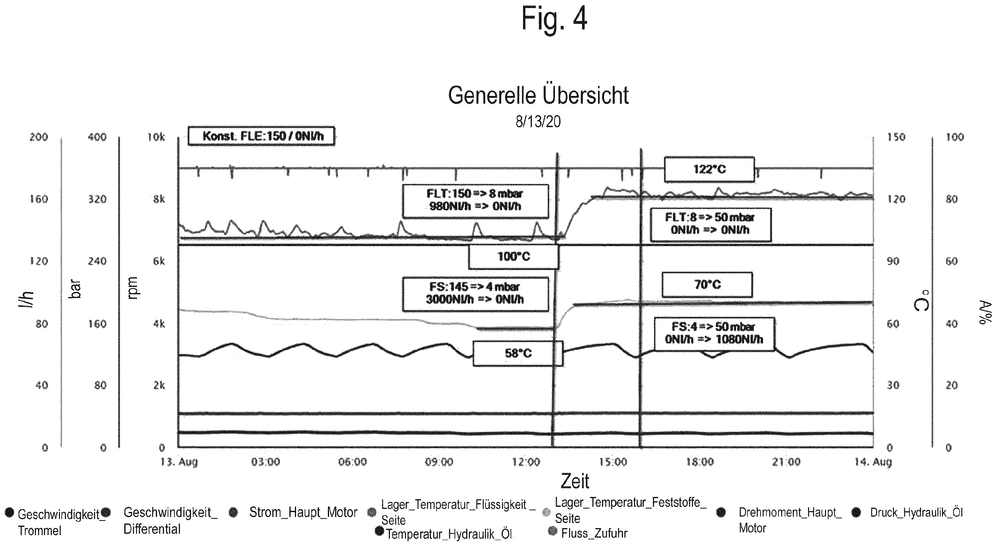

Fig. 4 zeigt einen Messschrieb eines Versuchs an einer Vollmantel-Schneckenzentrifuge. Der Dichtungsdurchmesser beträgt in diesem Versuch 110 mm und die Vollmantel-Schneckenzentrifuge wird mit einer Drehzahl von 6500 1/min betrieben. In diesem Versuch mit einem Paar Radialwellendichtringen 400a, b bzw. 400c, d an einem ersten Lager "FLT", wurde der Gasdruck Pₐₖₜ in der Kammer 402a, b zwischen dem Radialwellendichtring-Paar von 150 mbar auf 8 mbar abgesenkt. Die Gasleckage verringert sich dabei von 980 NI/h auf 0 NI/h, während die Lagertemperatur von 100°C auf 122°C ansteigt.

Fig. 4 zeigt einen weiteren Messschrieb eines weiteren Versuchs mit einem Paar Radialwellendichtringen 400a, b bzw. 400c, d an einem zweiten Lager "FS", bei dem der Gasdruck Pₐₖₜ in der Kammer 402a, b zwischen dem Radialwellendichtring-Paar von 145 mbar auf 4 mbar abgesenkt wurde. Die Gasleckage verringerte sich dabei von 3000 NI/h auf 0 NI/h während die Lagertemperatur von 58°C auf 70°C anstieg.

Der Zusammenhang zwischen erhöhter Reibleistung der jeweiligen Dichtlippe 401 und reduziertem Gasdruck Pₐₖₜ in der Kammer 402 a, b ist hierbei deutlich zu erkennen.

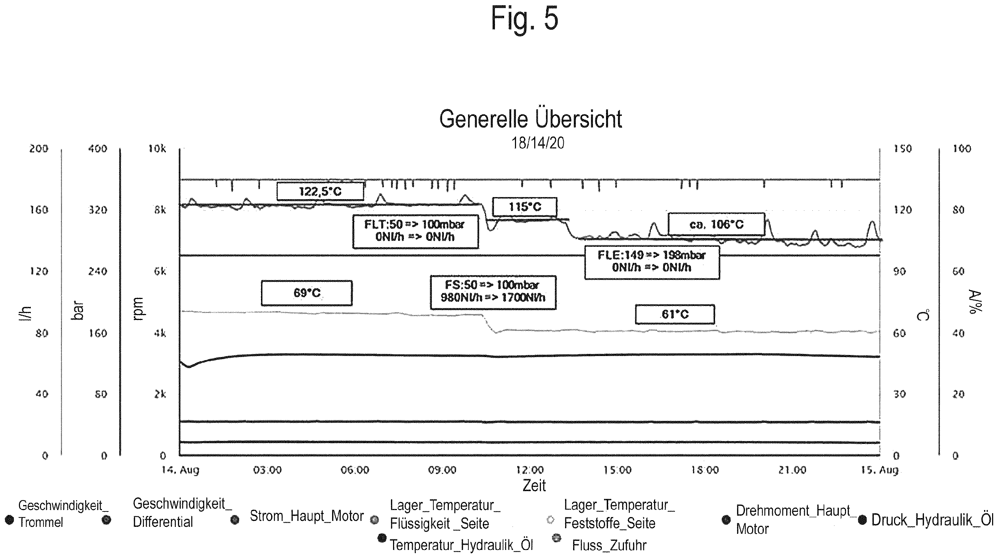

Fig. 5 zeigt einen Messschrieb eines weiteren Versuchs an einer Vollmantel-Schneckenzentrifuge. Der Dichtungsdurchmesser beträgt in diesem Versuch 110 mm und die Vollmantel-Schneckenzentrifuge wird mit einer Drehzahl von 6500 1/min betrieben. In diesem Versuch mit einem Paar Radialwellendichtringen 400a, b bzw. 400c, d an dem ersten Lager "FLT" wurde der Gasdruck Pₐₖₜ in der Kammer 402a, b zwischen dem Radialwellendichtring-Paar von 50 mbar auf 100 mbar erhöht. Eine Gasleckage trat nicht auf und die Lagertemperatur ging von 122,5°C auf 115°C zurück.

Fig. 5 zeigt einen weiteren Messschrieb eines weiteren Versuchs mit einem Paar Radialwellendichtringen 400a, b bzw. 400c, d an einem zweiten Lager "FS", bei dem der Gasdruck in der Kammer 402a, b zwischen dem Radialwellendichtring-Paar von 50 mbar auf 100 mbar erhöht wurde. Die Gasleckage stieg dabei von 980 NI/h auf 1700 NI/h während die Lagertemperatur von 69°C auf 61°C zurück ging.

Der Zusammenhang zwischen der reduzierten Reibleistung der jeweiligen Dichtlippe 401 bei erhöhtem Gasdruck Pₐₖₜ in der Kammer 402 a, b ist auch hier gut zu erkennen.

Für den Betrieb einer Vollmantel-Schneckenzentrifuge, bei dem eine zulaufende Suspension Su in der sich drehenden Trommel 210 in eine Feststoffphase Fe und in wenigstens eine Flüssigkeitsphase FI getrennt wird, wird somit vorzugsweise folgendes Verfahren angegeben:
Der Gasdruck Pₐₖₜ in der jeweiligen Kammer 401a, b der jeweiligen Dichtanordnung mit zwei Radialwellendichtringen 400a, b, c, d kann durch die Steuer- und / oder Regeleinrichtung und durch eine oder mehrere von dieser Steuer- und/oder Regeleinrichtung ansteuerbare Komponenten, insbesondere Ventile und/oder einen Kompressor oder dgl. als Druckquelle eingestellt werden.

Derart wird die jeweilige Kammer somit mit einem Gasdruck P_{ZU} beaufschlagt, der in einem Gasdruck Pₐₖₜ in der Kammer resultiert.

Der Gasdruck Pₐₖₜ kann durch die Steuer- und / oder Regeleinrichtung bis zu einem Gasdruck Pₘₐₓ erhöht werden, bei dem eine Gasleckage an einer neuen Dichtlippe 401 des jeweiligen Radialwellendichtrings 400a, b, c, d beginnt, da diese von der Welle abhebt.

Derart kann der Verschließ an der oder den Dichtlippen der jeweiligen Radialwellendichtringe 400a, b, c, d verringert werden.

Beispielhaft können in der Praxis der Zuführdruck P_{ZU} und der Blendenquerschnitt der Blende so gewählt werden, dass sich ein definierter Durchfluss, beispielsweise ein Durchfluss bzw. Strom von einigen Hundert NI/h bis einigen Tausend NI/h, beispielsweise etwa 400NI/h (NI/h: Normvolumenstrom/h) pro Paar der Radialwellendichtringe (also pro Kammer) einstellt. In dem Messprotokoll der Fig. 4 ist ein Beispiel mit 3000NI/h (mit Druckregelung) enthalten. Der Betrag des dem definierten Durchfluss entsprechenden Leckagedrucks Pₘₐₓ einer neuen Dichtanordnung 400 kann als Referenzwert - z.B. in der Steuer- und / oder Regeleinrichtung 500 - gespeichert werden.

Sodann bzw. dabei kann mit einer Messeinrichtung (nicht dargestellt) der aktuelle Leckagedruck Pₐₖₜ in oder an der jeweiligen Kammer gemessen werden. Dies kann kontinuierlich oder in definierten Zeitintervallen erfolgen.

Sodann wird der aktuell gemessene Leckagedruck Pₐₖₜ mit dem einen oder den gespeicherten Referenzwert(en) verglichen. Dies kann ebenfalls kontinuierlich oder in definierten Zeitintervallen erfolgen.

Daraufhin kann optional der aktuelle Verschleißzustand der jeweiligen Dichtanordnung 400 bewertet werden. Dies kann auf einfache Weise beispielsweise anhand wenigstens einer in der Steuer- und/oder Regeleinheit 500 hinterlegter Wertetabelle erfolgen, in der entsprechende Wertepaare des jeweiligen Leckagedrucks Pₐₖₜ und des dazugehörigen Verschleißgrades hinterlegt sind.

Es wird eine Meldung erzeugt, wenn der aktuelle Verschleißzustand einen definierten Schwellwert überschreitet, so dass der jeweilige Radialwellendichtring 400a, b, c, d ausgetauscht werden muss.

Durch diese Variante wird somit in einfacher Weise eine Messbarkeit des aktuellen Verschleißgrades der Dichtlippe 401, sowie eine Abschätzbarkeit oder Vorhersagbarkeit eines Totalausfalls eines Radialwellendichtrings 400a, b, c, d zur Verfügung gestellt, so dass eine vorausschauende Wartung der Radialwellendichtringe 400a, b, c, d möglich.

### Bezeichnungsliste

- 100: Gehäuse
- 101: Auffangraum
- 110: Ring- oder Hülsenabschnitt

- 200: Rotor
- 210: Trommel
- 211: zylindrischer Abschnitt
- 212: konischer Abschnitt
- 213: Trommeldeckel
- 214: Zulaufrohr
- 215: Verteiler
- 216: Schleuderraum
- 217: Flüssigkeitsablauf
- 218: Feststoffaustrag
- 219: Trommelwellenabschnitt
- 220: Trommelwellenabschnitt
- 221: Trommellager
- 222: Trommellager

- 230: Schnecke
- 231: zylindrischer Abschnitt
- 232: konischer Abschnitt
- 233: Schneckenwellenabschnitt
- 234: Schneckenwellenabschnitt
- 235: Schneckenlager
- 236: Schneckenlager

- 300: Antriebsvorrichtung
- 310: Getriebe
- 320: Riemenscheibe
- 330: Riemenscheibe

- 400: Dichtanordnung
- 400a, b, c, d: Radialwellendichtring
- 401: Dichtlippe
- 402a, b: Kammer
- 403a, b: Bohrung
- 404a, b: Leitung
- 405: Wellenhülse
- 406a, b: Blende

- 500: Steuer- und/oder Regeleinrichtung
- 600: Gasquelle

- D: Drehachse
- Su: Suspension
- Fe: Feststoffe
- FI: Flüssigkeitsphase
- P_{zu}: Zuführdruck
- Pₘₐₓ: Maximaldruck
- Pₐₖₜ: akt. Gasdruck, Leckagedruck

## Patentansprüche

1. Vollmantel-Schneckenzentrifuge zum Trennen einer zulaufenden Suspension in wenigstens eine Flüssigkeitsphase Fl und wenigstens eine Feststoffphase Fe, die wenigstens folgendes aufweist:
a. eine drehbare Trommel (210) mit einer Drehachse (D), wobei die Trommel (210) einen zylindrischen Abschnitt (211) und einen konischen Abschnitt (212) aufweist,
b. mindestens einen Zulauf für eine Suspension (Su), mindestens einen Flüssigkeitsablauf (217) und mindestens einen Feststoffaustrag (218),
c. eine relativ zur drehbaren Trommel (210) mit einer Differenzdrehzahl drehbaren, in der Trommel angeordnete Schnecke (230),
d. wenigstens eines oder mehrere Trommellager (221, 222) zur Lagerung der Trommel (210) in einem Gehäuse (100),
e. wenigstens eines oder mehrere Schneckenlager (236) zur Lagerung der Schnecke (230) in der Trommel (210),
f. wenigstens eine zwischen einem Trommelwellenabschnitt (219, 220) und dem Gehäuse (100) angeordneten Dichtanordnung (400) zum Schutz wenigstens eines der Lager, insbesondere wenigstens eines der Trommellager (221,222), gegen ein Eindringen von Bestandteilen der Suspension Su,
g. wobei die jeweilige Dichtanordnung (400) wenigstens zwei Radialwellendichtringe (400a, b, c, d) umfasst, die in gegenseitigem axialem Abstand unter Ausbildung wenigstens einer jeweiligen Kammer (402a, b) angeordnet sind,
h. wobei die jeweilige Kammer (402a, b) mit einer Gasquelle (600) mit einem Gasdruck beaufschlagbar ist, so dass sich in ihr ein aktueller Gasdruck Pₐₖₜ einstellt,
i. wobei die Kammer (402a, b) mit Hilfe einer Steuer- und/oder Regeleinrichtung und der Gasquelle (600) mit dem Gasdruck beaufschlagbar ist, wobei der Gasdruck Pₐₖₜ in der jeweiligen Kammer (402a, b) mit Hilfe der Steuer- und / oder Regeleinrichtung (500) veränderbar ist, und
j. wobei die jeweilige Leitung (404a, b) ein Druckmessgerät und/oder einen Drucksensor aufweist, mit dem der aktuelle Gasdruck Pₐₖₜ in oder außen an der jeweiligen Kammer (402a, b) messbar oder sensierbar ist.
**dadurch gekennzeichnet, dass**
k. die jeweiligen Radialwellendichtringe (400a, b, c, d) derart angeordnet sind, dass ihre jeweiligen Dichtlippen (401) von der jeweiligen Kammer (402a, b) weggerichtet sind,
l. die jeweilige Kammer (402a, b) jeweils über eine Bohrung (403a, 403b) und/oder eine Leitung (404a, b) mit dem Gasdruck beaufschlagt werden kann, und
m. die jeweilige Bohrung (403a, b) und/oder die jeweilige Leitung (404a, b) eine Blende (406a, 406b) aufweist oder ausbildet.

2. Vollmantel-Schneckenzentrifuge nach Anspruch 1, **dadurch gekennzeichnet, dass** beidseits des jeweiligen zu schützenden Lagers jeweils eine der Dichtanordnungen (400) angeordnet ist und dass die jeweiligen Radialwellendichtringe (400a, b, c, d) der jeweiligen Kammer (402a, b) jeweils in entgegengesetzter Richtung von der jeweiligen Kammer (402a, b) weggerichtet sind.

3. Verfahren zum Betrieb einer Vollmantel-Schneckenzentrifuge, die zum Trennen einer zulaufenden Suspension in wenigstens eine Flüssigkeitsphase FI und wenigstens eine Feststoffphase Fe, die wenigstens folgendes aufweist:
- eine drehbare Trommel (210) mit einer Drehachse (D), wobei die Trommel (210) einen zylindrischen Abschnitt (211) und einen konischen Abschnitt (212) aufweist,
- mindestens einen Zulauf für eine Suspension (Su), mindestens einen Flüssigkeitsablauf (217) und mindestens einen Feststoffaustrag (218),
- eine relativ zur drehbaren Trommel (210) mit einer Differenzdrehzahl drehbaren, in der Trommel angeordnete Schnecke (230),
- wenigstens eines oder mehrere Trommellager (221, 222) zur Lagerung der Trommel (210) in einem Gehäuse (100),
- wenigstens eines oder mehrere Schneckenlager (236) zur Lagerung der Schnecke (230) in der Trommel (210),
- wenigstens eine zwischen einem Trommelwellenabschnitt (219, 220) und dem Gehäuse (100) angeordneten Dichtanordnung (400) zum Schutz wenigstens eines der Lager, insbesondere wenigstens eines der Trommellager (221,222), gegen ein Eindringen von Bestandteilen der Suspension Su,
- wobei die jeweilige Dichtanordnung (400) wenigstens zwei Radialwellendichtringe (400a, b, c, d) umfasst, die in gegenseitigem axialem Abstand unter Ausbildung wenigstens einer jeweiligen Kammer (402a, b) angeordnet sind,
- wobei die jeweilige Kammer (402a, b) mit einer Gasquelle (600) mit einem Gasdruck beaufschlagbar ist, so dass sich in ihr ein aktueller Gasdruck Pₐₖₜ einstellt,
- wobei die jeweiligen Radialwellendichtringe (400a, b, c, d) derart angeordnet sind, dass ihre jeweiligen Dichtlippen (401) von der jeweiligen Kammer (402a, b) weggerichtet sind,
- wobei die Kammer (402a, b) mit Hilfe einer Steuer- und/oder Regeleinrichtung und der Gasquelle (600) mit dem Gasdruck beaufschlagbar ist, wobei der Gasdruck Pₐₖₜ in der jeweiligen Kammer (402a, b) mit Hilfe der Steuer- und / oder Regeleinrichtung (500) veränderbar ist, und
- wobei die jeweilige Leitung (404a, b) ein Druckmessgerät und/oder einen Drucksensor aufweist, mit dem der aktuelle Gasdruck Pₐₖₜ in oder außen an der jeweiligen Kammer (402a, b) messbar oder sensierbar ist.
bei welchem Verfahren eine zulaufende Suspension Su mit der Vollmantel-Schneckenzentrifuge in wenigstens eine Flüssigkeitsphase FI und wenigstens eine Feststoffphase Fe getrennt wird,
**dadurch gekennzeichnet, dass** während der Trennung in der jeweiligen Kammer (402a, b) der wenigstens einen Dichtanordnung (400) mit jeweils zwei Radialwellendichtringen (400a, b, c, d) durch die Gasquelle (600) ein Gasdruck Pₐₖₜ durch eine mit der jeweiligen Kammer (402a, b) wirkverbundene Gasquelle erzeugt wird, wobei der aktuelle Gasdruck Pₐₖₜ zumindest bis zu einem Gasdruck Pₘₐₓ erhöht wird, bei dem die radiale Anlage der jeweiligen Dichtlippe (401) überwunden wird, so dass eine Gasleckage an den Dichtlippen (401) des jeweiligen Radialwellendichtringes (400a, b, c, d) bei einem Leckagedruck Pₘₐₓ beginnt, dass der aktuelle Leckagedruck Pₐₖₜ gemessen wird, welcher dem aktuellen Gasdruck Pₐₖₜ in der Kammer entspricht, und dass der aktuell gemessene Leckagedruck Pₐₖₜ mit wenigstens einem gespeicherten Referenzwert verglichen wird, und dass der aktuelle Verschleißzustand der jeweiligen Dichtlippe (401) bzw. der Dichtanordnung (400) anhand des Vergleiches des aktuell gemessenen Leckagedrucks Pₐₖₜ mit dem wenigstens einen gespeicherten Referenzwert ermittelt und/oder bewertet wird.

4. Verfahren nach Anspruch 3, bei welchem Verfahren eine zulaufende Suspension Su mit der Vollmantel-Schneckenzentrifuge in wenigstens eine Flüssigkeitsphase FI und wenigstens eine Feststoffphase Fe getrennt wird, **dadurch gekennzeichnet, dass** während der Trennung in der jeweiligen Kammer (402a, b) der wenigstens einen Dichtanordnung (400) mit jeweils zwei Radialwellendichtringen (400a, b, c, d) ein Gasdruck Pₐₖₜ durch eine mit der jeweiligen Kammer (402a, b) wirkverbundene Gasquelle (600) erzeugt wird, wobei die jeweilige Kammer durch die jeweilige Blende (606a, b) mit dem Gasdruck beaufschlagt wird und das Zuführungsvolumen durch die jeweilige Blende (406a, b) begrenzt wird und wobei der Zuführdruck P_{zu} vor der jeweiligen Blende (406a, b) so eingestellt wird, dass durch den Gasdruck Pₐₖₜ in der Kammer die radiale Anlage der jeweiligen Dichtlippe (401) überwunden wird, so dass eine Gasleckage an den Dichtlippen (401) des jeweiligen Radialwellendichtringes (400a, b, c, d) bei einem Leckagedruck Pₘₐₓ beginnt, wobei der aktuelle Leckagedruck Pₐₖₜ gemessen wird, welcher dem aktuellen Gasdruck Pₐₖₜ in der Kammer entspricht, und dass der aktuell gemessene Leckagedruck Pₐₖₜ mit wenigstens einem gespeicherten Referenzwert verglichen wird, und dass der aktuelle Verschleißzustand der jeweiligen Dichtlippe (401) bzw. der Dichtanordnung (400) anhand des Vergleiches des aktuell gemessenen Leckagedrucks Pₐₖₜ mit dem wenigstens einen gespeicherten Referenzwert ermittelt und/oder bewertet wird.

5. Verfahren nach einem der Ansprüche 3 oder 4, **dadurch gekennzeichnet, dass** eine Meldung erzeugt und vorzugsweise ausgegeben wird, wenn der aktuelle Verschleißzustand einem definierten Schwellwert überschreitet, so dass der jeweilige Radialwellendichtring (400a, b, c, d) ausgetauscht werden muss.

## Claims

1. Solid bowl screw centrifuge for separating an inflowing suspension into at least one liquid phase Fl and at least one solid phase Fe, comprising at least:
a. a rotatable drum (210) having an axis of rotation (D), wherein the drum (210) has a cylindrical portion (211) and a conical portion (212),
b. at least one feed for a suspension (Su), at least one liquid drain (217), and at least one solid discharge (218),
c. a screw (230) arranged in the drum and rotatable relative to the rotatable drum (210) with a differential speed,
d. at least one or more drum bearings (221,222) for bearing the drum (210) in a housing (100),
e. at least one or more screw bearings (236) for bearing the screw (230) in the drum (210),
f. at least one sealing assembly (400) arranged between a drum shaft portion (219, 220) and the housing (100) for protecting at least one of the bearings, in particular at least one of the drum bearings (221, 222), against ingress of constituents of the suspension Su,
g. wherein the respective sealing assembly (400) comprises at least two radial shaft sealing rings (400a, b, c, d) which are arranged at a mutual axial spacing to form at least one respective chamber (402a, b),
h. wherein a gas pressure can be applied to the respective chamber (402a, b) by means of a gas source (600), so that a current gas pressure Pₐₖₜ is established therein,
i. wherein the chamber (402a, b) can be pressurized with the gas pressure by means of a control and/or regulating device and the gas source (600), wherein the gas pressure Pₐₖₜ in the respective chamber (402a, b) can be varied by means of the control and/or regulating device (500), and
j. wherein the respective line (404a, b) has a pressure measuring device and/or a pressure sensor with which the current gas pressure Pₐₖₜ in or outside the respective chamber (402a, b) can be measured or sensed, **characterized in that**
k. the respective radial shaft sealing rings (400a, b, c, d) are arranged such that their respective sealing lips (401) are directed away from the respective chamber (402a, b),
l. the respective chamber (402a, b) can each be pressurized with the gas pressure via a bore (403a, 403b) and/or a line (404a, b), and
m. the respective bore (403a, b) and/or the respective line (404a, b) comprises or forms an orifice plate (406a, 406b).

2. Solid bowl screw centrifuge according to claim 1, **characterized in that** one of the sealing assemblies (400) is arranged on each side of the respective bearing to be protected and **in that** the respective radial shaft sealing rings (400a, b, c, d) of the respective chamber (402a, b) are in each case directed away from the respective chamber (402a, b) in opposite directions.

3. Method for operating a solid-bowl centrifugal separator for separating an inflowing suspension into at least one liquid phase (FI) and at least one solid phase (Fe), comprising at least:
- a rotatable drum (210) having an axis of rotation (D), wherein the drum (210) has a cylindrical portion (211) and a conical portion (212),
- at least one feed for a suspension (Su), at least one liquid drain (217), and at least one solid discharge (218),
- a screw (230) arranged in the drum and rotatable relative to the rotatable drum (210) with a differential speed,
- at least one or more drum bearings (221,222) for bearing the drum (210) in a housing (100),
- at least one or more screw bearings (236) for bearing the screw (230) in the drum (210),
- at least one sealing assembly (400) arranged between a drum shaft portion (219, 220) and the housing (100) for protecting at least one of the bearings, in particular at least one of the drum bearings (221, 222), against ingress of constituents of the suspension Su,
- wherein the respective sealing assembly (400) comprises at least two radial shaft sealing rings (400a, b, c, d) which are arranged at a mutual axial spacing to form at least one respective chamber (402a, b),
- wherein a gas pressure can be applied to the respective chamber (402a, b) by means of a gas source (600), so that a current gas pressure Pₐₖₜ is established therein,
- the respective radial shaft sealing rings (400a, b, c, d) are arranged such that their respective sealing lips (401) are directed away from the respective chamber (402a, b),
- wherein the chamber (402a, b) can be pressurized with the gas pressure by means of a control and/or regulating device and the gas source (600), wherein the gas pressure Pₐₖₜ in the respective chamber (402a, b) can be varied by means of the control and/or regulating device (500), and
- wherein the respective line (404a, b) has a pressure measuring device and/or a pressure sensor with which the current gas pressure Pₐₖₜ in or outside the respective chamber (402a, b) can be measured or sensed,
in which method an inflowing suspension Su is separated by the solid bowl screw centrifuge into at least one liquid phase Fl and at least one solid phase Fe,
**characterized in that** during the separation in the respective chamber (402a, b) of the at least one sealing assembly (400) with in each case two radial shaft sealing rings (400a, b, c, d), by means of a gas source (600) a gas pressure Pₐₖₜ is generated by a gas source operatively connected to the respective chamber (402a, b), wherein the current gas pressure Pₐₖₜ is increased at least up to a gas pressure Pₘₐₓ at which the radial contact of the respective sealing lip (401) is overcome, so that a gas leakage at the sealing lips (401) of the respective radial shaft sealing ring (400a, b, c, d) starts at a leakage pressure Pₘₐₓ, **in that** the current leakage pressure Pₐₖₜ, which corresponds to the current gas pressure Pₐₖₜ in the chamber, is measured, and **in that** the currently measured leakage pressure Pₐₖₜ is compared with at least one stored reference value, and **in that** the current state of wear of the respective sealing lip (401) or of the sealing assembly (400) is determined and/or evaluated on the basis of the comparison of the currently measured leakage pressure Pₐₖₜ with the at least one stored reference value.

4. Method according to claim 3, in which method an inflowing suspension Su is separated by the solid bowl centrifuge into at least one liquid phase Fl and at least one solids phase Fe, **characterized in that** during the separation in the respective chamber (402a, b) of the at least one sealing assembly (400) with in each case two radial shaft sealing rings (400a, b, c, d), a gas pressure Pₐₖₜ is generated by a gas source (600) operatively connected to the respective chamber (402a, b), wherein the respective chamber is acted upon by the gas pressure through the respective orifice plate (606a, b) and the feed volume is limited by the respective orifice plate (406a, b), and wherein the feed pressure P_{zu} upstream of the respective orifice plate (406a, b) is set in such a way that the radial contact of the respective sealing lip (401) is overcome by the gas pressure Pₐₖₜ in the chamber, so that a gas leakage at the sealing lips (401) of the respective radial shaft sealing ring (400a, b, c, d) begins at a leakage pressure Pₘₐₓ, wherein the current leakage pressure Pₐₖₜ, which corresponds to the current gas pressure Pₐₖₜ in the chamber, is measured, and **in that** the currently measured leakage pressure Pₐₖₜ is compared with at least one stored reference value, and **in that** the current state of wear of the respective sealing lip (401) and/or of the sealing assembly (400) is determined and/or evaluated on the basis of the comparison of the currently measured leakage pressure Pₐₖₜ with the at least one stored reference value.

5. Method according to one of claims 3 or 4, **characterized in that** a message is generated and preferably output if the current state of wear exceeds a defined threshold value, so that the respective radial shaft sealing ring (400a, b, c, d) must be replaced.

## Revendications

1. Centrifugeuse à vis à bol plein pour la séparation d'une suspension entrante en au moins une phase liquide FI et au moins une phase solide Fe, comportant au moins les éléments suivants :
a. un tambour rotatif (210) avec un axe de rotation (D), lequel tambour (210) comprend une partie cylindrique (211) et une partie conique (212),
b. au moins une arrivée pour une suspension (Su), au moins un écoulement de liquide (217) et au moins une sortie de solides (218),
c. une vis sans fin (230) pouvant tourner à une vitesse de rotation différente du tambour rotatif (210) et disposée dans le tambour,
d. au moins un ou plusieurs paliers de tambour (221, 222) pour supporter le tambour (210) dans un caisson (100),
e. au moins un ou plusieurs paliers de vis (236) pour supporter la vis sans fin (230) dans le tambour (210),
f. au moins une garniture d'étanchéité (400) disposée entre une partie de l'arbre de tambour (219, 220) et le caisson (100) pour protéger au moins un des paliers, en particulier au moins un des paliers de tambour (221, 222), contre une pénétration de composants de la suspension (Su),
g. dans laquelle la garniture d'étanchéité (400) en question comprend au moins deux joints d'étanchéité radiaux (400a, b, c, d) qui sont disposés à une distance axiale l'un de l'autre en formant au moins une chambre (402a, b) correspondante,
h. dans laquelle la chambre (402a, b) correspondante peut être soumise à une pression de gaz par une source de gaz (600) de sorte qu'une pression de gaz actuelle P_{act} s'établit à l'intérieur,
i. dans laquelle la chambre (402a, b) peut être soumise à la pression de gaz à l'aide d'une installation de commande et/ou de régulation et de la source de gaz (600), la pression de gaz P_{act} dans chaque chambre (402a, b) pouvant être modifiée à l'aide de l'installation de commande et/ou de régulation (500), et
j. dans laquelle chaque conduite (404a, b) comporte un appareil de mesure de la pression et/ou un capteur de pression avec lequel la pression de gaz actuelle P_{act} peut être mesurée ou détectée dans la chambre (402a, b) correspondante ou dessus à l'extérieur,
**caractérisée en ce que**
k. les joints d'étanchéité radiaux (400a, b, c, d) sont disposés de telle manière que leurs lèvres d'étanchéité (401) sont orientées à l'opposé de la chambre (402a, b) correspondante,
l. la chambre (402a, b) correspondante peut être soumise à la pression de gaz via un trou percé (403a, 403b) et/ou une conduite (404a, b) et
m. le trou percé (403a, b) correspondant et/ou la conduite (404a, b) correspondante comportent ou forment un obturateur (406a, 406b).

2. Centrifugeuse à vis à bol plein selon la revendication 1, **caractérisée en ce qu'**une des garnitures d'étanchéité (400) est disposée de part et d'autre du palier à protéger et **en ce que** les joints d'étanchéité radiaux (400a, b, c, d) correspondants de chaque chambre (402a, b) sont orientés dans des sens opposés à l'opposé de la chambre (402a, b) en question.

3. Procédé pour le fonctionnement d'une centrifugeuse à vis à bol plein pour la séparation d'une suspension entrante en au moins une phase liquide FI et au moins une phase solide Fe, qui comprend au moins les éléments suivants :
- un tambour rotatif (210) avec un axe de rotation (D), lequel tambour (210) comprend une partie cylindrique (211) et une partie conique (212),
- au moins une arrivée pour une suspension (Su), au moins un écoulement de liquide (217) et au moins une sortie de solides (218),
- une vis sans fin (230) pouvant tourner à une vitesse de rotation différente du tambour rotatif (210) et disposée dans le tambour,
- au moins un ou plusieurs paliers de tambour (221, 222) pour supporter le tambour (210) dans un caisson (100),
- au moins un ou plusieurs paliers de vis (236) pour supporter la vis sans fin (230) dans le tambour (210),
- au moins une garniture d'étanchéité (400) disposée entre une partie de l'arbre de tambour (219, 220) et le caisson (100) pour protéger au moins un des paliers, en particulier au moins un des paliers de tambour (221, 222), contre la pénétration de composants de la suspension (Su),
- dans lequel la garniture d'étanchéité (400) en question comprend au moins deux joints d'étanchéité radiaux (400a, b, c, d) qui sont disposés à une distance axiale l'un de l'autre en formant au moins une chambre (402a, b) correspondante,
- dans lequel la chambre (402a, b) correspondante peut être soumise à une pression de gaz par une source de gaz (600) de sorte qu'une pression de gaz actuelle P_{act} s'établit à l'intérieur,
- dans lequel les joints d'étanchéité radiaux (400a, b, c, d) sont disposés de telle manière que leurs lèvres d'étanchéité (401) soient orientées à l'opposé de la chambre (402a, b) correspondante,
- dans lequel la chambre (402a, b) peut être soumise à la pression de gaz à l'aide d'une installation de commande et/ou de régulation et de la source de gaz (600), la pression de gaz P_{act} dans chaque chambre (402a, b) pouvant être modifiée à l'aide de l'installation de commande et/ou de régulation (500), et
- dans lequel chaque conduite (404a, b) comporte un appareil de mesure de la pression et/ou un capteur de pression avec lequel la pression de gaz actuelle P_{act} peut être mesurée ou détectée dans la chambre (402a, b) correspondante ou dessus à l'extérieur,
dans lequel une suspension entrante (Su) est séparée par la centrifugeuse à vis à bol plein en au moins une phase liquide FI et au moins une phase solide Fe,
**caractérisé en ce que**, pendant la séparation, une pression de gaz P_{act} est créée par la source de gaz (600) dans la chambre (402a, b) correspondante de l'au moins une garniture d'étanchéité (400) munie de deux joints d'étanchéité radiaux (400a, b, c, d) par une source de gaz en liaison active avec la chambre (402a, b) en question, la pression de gaz actuelle P_{act} étant augmentée au moins jusqu'à une pression de gaz Pₘₐₓ à laquelle l'appui radial de la lèvre d'étanchéité (401) correspondante est surmonté, de sorte qu'une fuite de gaz s'amorce sur les lèvres d'étanchéité (401) du joint d'étanchéité radial (400a, b, c, d) en question à une pression de fuite Pₘₐₓ, que la pression de fuite actuelle P_{act}, correspondant à la pression de gaz actuelle P_{act} dans la chambre, est mesurée, et que la pression de fuite actuelle mesurée P_{act} est comparée avec au moins une valeur de référence en mémoire et l'état d'usure actuel de la lèvre d'étanchéité (401) en question ou de la garniture d'étanchéité (400) est déterminé et/ou évalué à l'aide de la comparaison de la pression de fuite actuelle mesurée P_{act} et de l'au moins une valeur de référence en mémoire.

4. Procédé selon la revendication 3, dans lequel une suspension entrante Su est séparée par la centrifugeuse à vis à bol plein en au moins une phase liquide FI et au moins une phase solide Fe, **caractérisé en ce que**, pendant la séparation, une pression de gaz P_{act} est créée dans la chambre (402a, b) en question de l'au moins une garniture d'étanchéité (400) munie de deux joints d'étanchéité radiaux (400a, b, c, d) par une source de gaz (600) en liaison active avec la chambre (402a, b) en question, dans lequel la chambre en question est soumise à la pression de gaz à travers l'obturateur (606a, b) correspondant et le volume amené est limité par l'obturateur (406a, b) correspondant et dans lequel la pression d'arrivée Pₐᵣᵣ en amont de l'obturateur (406a, b) correspondant est réglée de telle manière que la pression de gaz P_{act} dans la chambre surmonte l'appui radial de la lèvre d'étanchéité (401) correspondante, de sorte qu'une fuite de gaz s'amorce sur les lèvres d'étanchéité (401) du joint d'étanchéité radial (400a, b, c, d) en question à une pression de fuite Pₘₐₓ, que la pression de fuite actuelle P_{act}, correspondant à la pression de gaz actuelle P_{act} dans la chambre, est mesurée, et que la pression de fuite actuelle mesurée P_{act} est comparée avec au moins une valeur de référence en mémoire et l'état d'usure actuel de la lèvre d'étanchéité (401) en question ou de la garniture d'étanchéité (400) est déterminé et/ou évalué à l'aide de la comparaison de la pression de fuite actuelle mesurée P_{act} et de l'au moins une valeur de référence en mémoire.

5. Procédé selon l'une des revendications 3 ou 4, **caractérisé en ce qu'**un message est généré et, de préférence, émis si l'état d'usure actuel dépasse un seuil défini, de sorte que le joint d'arbre radial (400a, b, c, d) correspondant doit être remplacé.
